Europäisches Patentamt

European Patent Office

Office européen des brevets

(11) Veröffentlichungsnummer: **0 198 263 B1**

(12) **EUROPÄISCHE PATENTSCHRIFT**

(45) Veröffentlichungstag der Patentschrift: **29.01.92**

(21) Anmeldenummer: **86103805.7**

(22) Anmeldetag: **20.03.86**

(51) Int. Cl.⁵: **H04L 25/28**

(54) **Schaltungsanordnung zur erdfreien Übertragung digitaler Signale über Trennstellen.**

(30) Priorität: **03.04.85 DE 3512280**

(43) Veröffentlichungstag der Anmeldung:
**22.10.86 Patentblatt 86/43**

(45) Bekanntmachung des Hinweises auf die
Patenterteilung:
**29.01.92 Patentblatt 92/05**

(84) Benannte Vertragsstaaten:
**BE DE FR GB IT NL SE**

(56) Entgegenhaltungen:
**EP-A- 0 006 194**
**DE-A- 2 945 465**

(73) Patentinhaber: **Siemens Nixdorf Informationssysteme Aktiengesellschaft
Fürstenallee 7
W-4790 Paderborn(DE)**

(72) Erfinder: **Hüllwegen, Josef
Hüttenstrasse 61
W-4791 Altenbeken(DE)**

(74) Vertreter: **Schaumburg, Thoenes & Englaender
Mauerkircherstrasse 31 Postfach 86 07 48
W-8000 München 86(DE)**

## Beschreibung

Die Erfindung betrifft eine Schaltungsanordnung nach dem Oberbegriff des Patentanspruchs 1 bzw. 6. Eine solche Schaltungsanordnung ist z.B. aus der DE-A-2 945 465 bekannt.

Zur störungsfreien Übertragung digitaler Signale, z.B. Datensignale mit vorausgehender Pegelinformation, über Übertragungsleitungen ist es erforderlich, daß die binär kodierten Informationen erdfrei von einer Übertragungseinrichtung zur anderen gelangen. Dies bedeutet, daß die Übertragungseinrichtungen, also sowohl die Sendeeinrichtung als auch die Empfangseinrichtung, eine galvanisch getrennte Schnittstelle enthalten müssen. Zur galvanischen Trennung können grundsätzlich Übertrager verwendet werden. Die Übertragung digitaler Signale in Form von Basisbandsignalen, die auch eine ununterbrochene Folge logischer 1 oder logischer 0 Signale enthalten können, ist jedoch mit Übertragern ohne weiteres nicht möglich. Hierzu müssen die digitalen Signale in Hochfrequenzschwingungen oder Nadelimpulse umgeformt werden, um sie in dieser Form mit Übertragern galvanisch getrennt übertragen zu können.

Es sind ferner bereits Schaltungsanordnungen bekannt, bei denen zur erdfreien Übertragung digitaler Signale über Trennstellen Optokoppler verwendet werden. Diese haben aber den Nachteil eines hohen Stromverbrauchs.

Es ist Aufgabe der Erfindung, eine Schaltungsanordnung eingangs genannter Art anzugeben, mit der die galvanisch getrennte Übertragung eines Datensignals mit vorausgehender Pegelinformation bei hoher Übertragungsgeschwindigkeit mit minimalem Bauelementeaufwand bei minimalem Stromverbrauch möglich ist.

Die Erfindung löst diese Aufgabe durch die Merkmale des Patentanspruchs 1 oder des Patentanspruchs 6. Vorteilhafte Weiterbildungen sind in den jeweiligen abhängigen Ansprüchen beschrieben.

Zur Kennzeichnung des Nadelimpulszuges werden bei der ersten Lösungsmöglichkeit nach Patentanspruch 1 abhängig vom logischen Zustand des digitalen Signals einzelne Nadelimpulse unterdrückt. Wenn gerade kein zu übertragendes digitales Signal am Eingang der erfindungsgemäßen Schaltungsanordnung anliegt, so wird diese Information dadurch übertragen, daß die Zuführung sämtlicher Nadelimpulse zum Übertrager unterbunden wird. Zur Wiederherstellung des digitalen Signals auf der Sekundärseite des Übertragers wird das Auftreten bzw. Nichtauftreten von Nadelimpulsen ausgewertet. Gelangen keine Nadelimpulse auf die Sekundärseite des Übertragers, so bedeutet dies, daß gerade kein zu übertragendes digitales Signal vorliegt. Werden dagegen Nadelimpulse auf die Sekundärseite des Übertragers übertragen, erfolgt die Signalgabe des wiederhergestellten digitalen Signals in Abhängigkeit vom zeitlichen Auftreten der Nadelimpulse auf der Sekundärseite des Übertragers.

Die erste Lösungsmöglichkeit bewirkt die Übertragung der Pegelinformation, ob ein Datensignal mit einem ausreichenden Signalpegel am Eingang der Schaltungsanordnung anliegt oder nicht, dadurch, daß bei nicht ausreichendem Signalpegel des Datensignals die Zuführung sämtlicher Nadelimpulse zum Übertrager unterbunden wird. Liegt dagegen ein Datensignal mit gültigem Signalpegel am Eingang der Schaltungsanordnung vor, so werden zur Kennzeichnung des jeweiligen Binärzustandes des Datensignals nur einzelne Nadelimpulse unterdrückt. Der auf der Sekundärseite des Übertragers empfangene Nadelimpulszug wird dann hinsichtlich der Impulsabstände ausgewertet. Dies geschieht dadurch, daß der übertragene Nadelimpulszug mindestens zwei Speichergliedern mit unterschiedlichen Speicherzeiten zugeführt wird. Diese Speicherzeiten sind dabei so bemessen, daß eines der beiden Speicherglieder immer dann aktiviert wird, wenn überhaupt Nadelimpulse übertragen werden und daß das andere Speicherglied nur dann aktiviert wird, wenn ein Teilimpulszug ohne Unterdrückung einzelner Nadelimpulse übertragen wird.

Die Abschaltbarkeit des Ausgangssignals des Rechtecksignalgenerators durch die Pegelinformation ermöglicht es, daß die gesamte Schaltungsanordnung mit Ausnahme des Rechtecksignalgenerators abgeschaltet werden kann, wenn kein Datensignal an seinem Eingang anliegt. Erst wenn ein Datensignal am Eingang der Schaltungsanordnung anliegt, werden in der Verknüpfungsschaltung aus den Flanken der Rechteckschwingung des Rechtecksignalgenerators Nadelimpulse erzeugt, von denen zur Kennzeichnung des jeweiligen logischen Zustands des Datensignals, beispielsweise bei Vorliegen einer logischen 0, jeder zweite Nadelimpuls unterdrückt wird. Dies hat dann zur Folge, daß die übertragenen Nadelimpulse bei Übertragung einer logischen 0 im Vergleich zur Übertragung einer logischen 1 den doppelten Impulsabstand haben. Auf diese Weise wird eine einfache Auswertung des übertragenen Nadelimpulszuges auf der Sekundärseite des Übertragers und damit eine einfache Signalgabe möglich.

Die Auswertung des übertragenen Nadelimpulszuges erfolgt dabei vorteilhaft in einer Schaltung nach Patentanspruch 3. Dies hat zur Folge, daß bei einem übertragenen Impulszug, bei dem jeder zweite Nadelimpuls unterdrückt ist, nur die zweite monostabile Schaltung anhaltend im aktivierten Zustand gehalten wird, während die erste monostabile Schaltung nach Aktivierung durch einen Nadelimpuls nach Ablauf ihrer Schaltzeit wieder in ihren Ausgangszustand zurückfällt und erst wieder beim nächsten Auftreten eines Nadelimpulses erneut aktiviert wird. Bei einem übertragenen Impulszug, bei dem kein Nadelimpuls unterdrückt wird, bleiben dagegen beide monostabilen Schaltungen anhaltend in ihrem aktivierten Zustand. Durch Auswertung der Ausgangssignale der beiden monostabilen Schaltungen können auf einfache Weise sowohl die Pegelinformation als auch das Datensignal zurückgewonnen werden.

Bei der Schaltung nach Patentanspruch 5 ermöglicht der Schalttransistor in einfacher Weise die Verstärkung des an der Sekundärwicklung des Übertragers anliegenden Nadelimpulszugs. Ferner dient er auch als Signalformer.

Bei der Lösungsmöglichkeit nach Patentanspruch 6 wird die Polarität der Nadelimpulse zur Kennzeichnung des Nadelimpulszuges in Abhängigkeit vom logischen Zustand des digitalen Signals verändert. Zur Übertragung der Information, daß gerade kein zu übertragendes digitales Signal am Eingang der erfindungsgemäßen Schaltungsanordnung anliegt, wird wie bei der ersten Lösungsmöglichkeit die Zuführung sämtlicher Nadelimpulse zum Übertrager unterbunden. Auf der Sekundärseite des Übertragers wird diese Information dann dadurch wiedergewonnen, daß das Auftreten bzw. Nichtauftreten von Nadelimpulsen ausgewertet wird. Wenn Nadelimpulse auf der Sekundärseite des Übertragers auftreten, erfolgt die Wiederherstellung des digitalen Signals in Abhängigkeit von der Polarität der Nadelimpulse.

Die Schaltungsanordnung nach Patentanspruch 6 zeichnet sich besonders durch ihren einfachen standardisierten Aufbau aus drei Exklusiv-ODER-Gliedern als Verknüpfungsglieder auf der Primärseite des Übertragers aus.

Durch die Ansteuerung der bistabilen Schaltung nach Patentanspruch 7 wird deren Ausgangssignal bei einer Änderung des Zustands des Datensignals in einfacher Weise umgesteuert, da die Ausgangssignale der Sekundärwicklungen verschiedene Polarität haben.

Durch die gemäß Patentanspruch 8 vorgesehene Verwendung der beiden Transistoren, deren Steuerelektroden mit den freien Anschlüssen der Sekundärwicklungen des Übertragers verbunden sind, liegen an der bistabilen Schaltung zu jedem Zeitpunkt Eingangssignale mit einem vorgegebenen, definierten Pegel, was zur Störunanfälligkeit der gesamten Schaltungsanordnung beiträgt.

Im folgenden wird die Erfindung an Hand zweier Ausführungsbeispiele näher erläutert. Es zeigen

Fig. 1 eine erste Ausführungsform einer Schaltungsanordnung zur erdfreien Übertragung digitaler Signale über Trennstellen,

Fig. 2 den Signalverlauf an einigen Stellen der Schaltungsanordnung von Fig. 1,

Fig. 3 eine zweite Ausführungsform einer Schaltungsanordnung zur erdfreien Übertragung digitaler Signale über Trennstellen und

Fig. 4 den Signalverlauf an einigen Stellen der Schaltungsanordnung von Fig. 3.

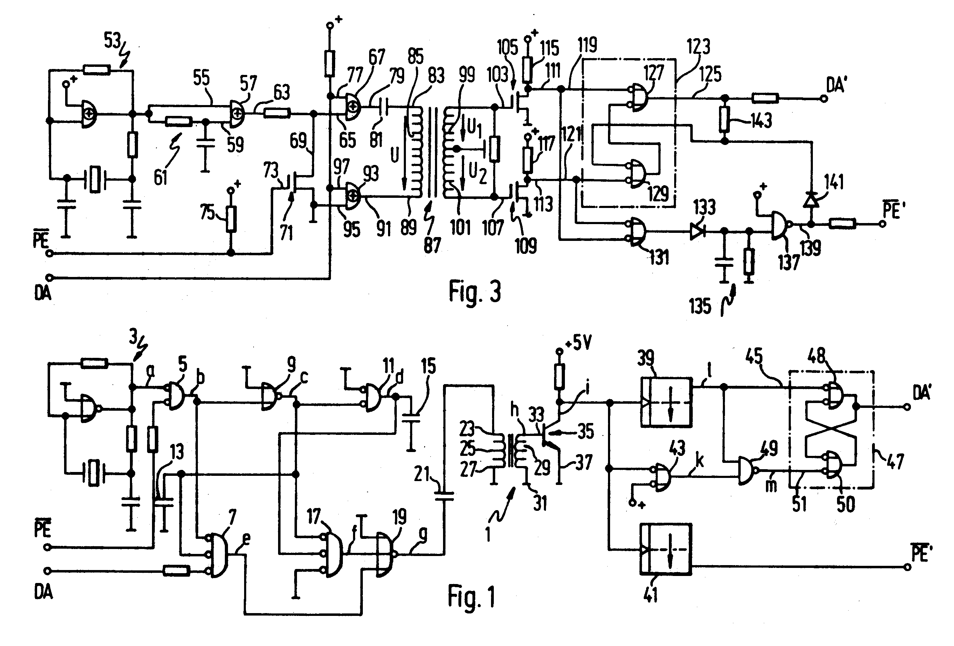

In Fig. 1 ist eine Trennstellenschaltung dargestellt, die die erdfreie Übertragung eines digitalen Datensignals DA zusammen mit einer Pegelinformation $\overline{PE}$ über nur einen Trennstellenübertrager 1 ermöglicht. Die Schaltungsanordnung enthält auf der Primärseite des Trennstellenübertragers 1 einen in an sich bekannter Weise aufgebauten Rechtecksignalgenerator 3, dessen Aufbau nicht näher erläutert wird. Die am Ausgang des Rechtecksignalgenerators 3 anliegende Rechteckschwingung wird einem ersten konjunktiven Verknüpfungsglied 5 zugeführt, das über seinen zweiten Eingang durch die Pegelinformation $\overline{PE}$ freigegeben werden kann. Das Ausgangssignal dieses ersten konjunktiven Verknüpfungsgliedes 5 steuert ein zweites konjunktives Verknüpfungsglied 7 und ein als verzögernder Invertierer geschaltetes Verknüpfungsglied 9. Der Ausgang c dieses Verknüpfungsgliedes 9 ist mit dem Eingang eines weiteren, ebenfalls als verzögernder Invertierer geschalteten Verknüpfungsgliedes 11 verbunden. Die Verzögerung der Verknüpfungsglieder 9 und 11 wird durch die Signallaufzeit der Verknüpfungsglieder selbst und durch Kondensatoren 13 und 15 erreicht. Die Ausgänge c bzw. d der Verknüpfungsglieder 9 und 11 sind mit den Eingängen eines dritten konjunktiven Verknüpfungsgliedes 17 verbunden. Am Ausgang f dieses Verknüpfungsgliedes 17 entstehen Nadelimpulse, die von der negativen Flanke der vom Rechtecksignalgenerator 3 erzeugten Rechteckschwingung dadurch abgeleitet werden, daß dieses dritte konjunktive Verknüpfungsglied 17 an seinem Ausgang f nur dann einen positiven Impuls abgibt, wenn beide Eingangssignale gleichzeitig Nullpotential annehmen. Da das zweite Eingangssignal gegenüber dem ersten Eingangssignal invertiert und verzögert ist, nehmen beide Eingangssignale, bedingt durch die Signalverzögerung, bei jedem Impuls der Rechteckschwingung des Rechtecksignalgenerators 3 nur kurzzeitig gleichzeitig Nullpotential an. Auf diese Weise entstehen am Ausgang f dieses dritten konjunktiven Verknüpfungsgliedes 17 Nadelimpulse, die nur eine sehr kurze Impulsdauer haben. Dem zweiten konjunktiven Verknüpfungsglied 7 werden neben dem Ausgangssignal des ersten konjunktiven Verknüpfungsgliedes 5 noch das Ausgangssignal des Verknüpfungsgliedes 9 und das Datensignal DA zugeführt. Abhängig vom Signalpegel des Datensignals DA kann dieses zweite konjunktive Verknüpfungsglied 7 gesperrt bzw. freigeschaltet werden, so daß dann an seinem Ausgang e Nadelimpulse entstehen, die in vorstehend beschriebener Weise von der positiven Flanke der am Ausgang a des Rechtecksignalgenerators 3 abgegebenen Rechteckschwingung abgeleitet sind. Der Ausgang e des zweiten konjunktiven Verknüpfungsgliedes 7 und der Ausgang f des dritten konjunktiven Verknüpfungsgliedes 17 sind mit den Eingängen eines ersten disjunktiven Verknüpfungsgliedes 19 verbunden, in dem die Ausgangssignale des zweiten und dritten konjunktiven Verknüpfungsgliedes 7, 17 zusammengeführt werden. Für den Fall, daß das zweite konjunktive Verknüpfungsglied 7 durch das Datensignal DA gesperrt ist, ist die Anzahl der am Ausgang g des ersten disjunktiven Verknüpfungsgliedes 19 erscheinenden Nadelimpulse nur halb so groß im Vergleich zu dem Fall, daß das zweite konjunktive Verknüpfungsglied 7 durch das Datensignal DA freigeschaltet ist, so daß auch an dessen Ausgang e Nadelimpulse abgegeben werden. Der Ausgang g des ersten disjunktiven Verknüpfungsgliedes 19 ist über einen Kondensator 21 mit dem einen Anschluß 23 der Primärwicklung 25 des Trennstellenübertragers 1 verbunden, dessen anderer Anschluß 27 auf Erdpotential liegt. Der Trennstellenübertrager 1 ist mit nur wenigen Windungen ausgeführt, da dies zur Übertragung von Nadelimpulsen genügt. Während die Sekundärwicklung 29 mit ihrem einen Anschluß 31 auf Erdpotential liegt, ist sie mit ihrem anderen Anschluß h mit der Steuerelektrode 33 eines Schalttransistors 35 verbunden, an dessen Kollektoranschluß i die sekundärseitig zu nutzenden Nadelimpulse auftreten. Während der Emitteranschluß 37 des Schalttransistors 35 auf Erdpotential liegt, ist dessen Ausgangsanschluß i mit der Versorgungsspannung +5V, mit dem Eingang einer ersten monostabilen Schaltung 39, ferner mit dem Eingang einer zweiten monostabilen Schaltung 41 und schließlich mit dem freien Eingang eines als Invertierer geschalteten Verknüpfungsgliedes 43 verbunden. Während die erste monostabile Schaltung 39 eine Schaltzeit hat, die zwischen dem einfachen und dem doppelten minimalen Abstand der Nadelimpulse liegt, ist die Schaltzeit der zweiten monostabilen Schaltung 41 länger als der doppelte minimale Abstand der Nadelimpulse. Der Ausgang 1 der ersten monostabilen Schaltung 39 ist einerseits mit dem Setzeingang 45 einer bistabilen Schaltung 47 und andererseits mit einem Eingang eines vierten konjunktiven Verknüpfungsgliedes 49 verbunden, dessen zweiter Eingang an den Ausgang k des Verknüpfungsgliedes 43 angeschlossen ist und dessen Ausgangssignal den Rücksetzeingang 51 der bistabilen Schaltung 47 steuert, an deren Ausgang das wiederhergestellte Datensignal DA' erscheint. Die bistabile Schaltung 47 ist durch entsprechende Verschaltung zweier ODER-Glieder 48 und 50 mit invertierenden Eingängen gebildet.

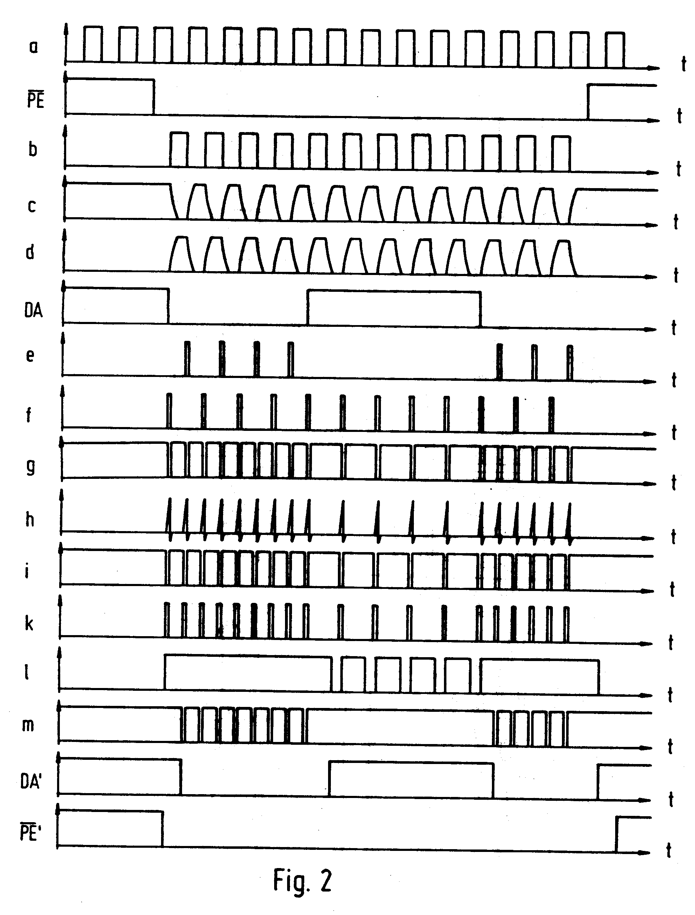

Nachdem vorstehend der Aufbau der in Fig. 1 dargestellten Schaltungsanordnung zur erdfreien Übertragung digitaler Signale über Trennstellen beschrieben wurde, wird im folgenden die Funktion dieser Schaltungsanordnung an Hand der Fig. 1 in Verbindung mit Fig. 2 näher erläutert.

Mit Hilfe des Rechtecksignalgenerators 3 wird die in Fig. 2a dargestellte Rechteckschwingung erzeugt. Die Frequenz dieser Rechteckschwingung sollte entgegen der Darstellung in Fig. 2 mindestens um den Faktor 10 höher sein als die Frequenz des Datensignals DA, um die Grundverzerrung des zu übertragenden Datensignals DA möglichst klein zu halten. Als Pegelinformation wird das in Fig. 2 mit $\overline{PE}$ bezeichnete Signal neben der Rechteckschwingung dem ersten konjunktiven Verknüpfungsglied 5 zugeführt. Hat die Pegelinformation $\overline{PE}$ ein positives Potential, so wird das erste konjunktive Verknüpfungsglied 5 gesperrt. Liegt dagegen der Spannungspegel 0-Volt als Pegelinformation am Eingang des ersten konjunktiven Verknüpfungsgliedes 5 an, so wird die hochfrequente Rechteckschwingung (Fig. 2b) der weiteren Verknüpfungsschaltung 7, 9, 11, 17, 19 zugeführt. Durch das Verknüpfungsglied 9 wird die hochfrequente Rechteckschwingung invertiert und mit Unterstützung des Kondensators 13 verzögert, so daß an seinem Ausgang c das in Fig. 2c gezeigte Signal entsteht. Dieses wird dem Verknüpfungsglied 11 zugeführt, durch das analog zum Verknüpfungsglied 9 abermals eine Invertierung und Verzögerung vorgenommen wird. Das Ausgangssignal dieses Verknüpfungsgliedes 11 zeigt Fig. 2d. Aus den Ausgangssignalen der beiden Verknüpfungsglieder 9 und 11 (siehe Fig. 2c und d) werden in vorstehend beschriebener Weise die in Fig. 2f dargestellten Nadelimpulse abgeleitet. Ferner werden, für den Fall, daß das Datensignal DA den Spannungspegel 0-Volt annimmt, aus den Ausgangssignalen (siehe Fig. 2b und c) des ersten konjunktiven Verknüpfungsgliedes 5 und des Verknüpfungsgliedes 9 die in Fig. 2e dargestellten Nadelimpulse erzeugt, die am Ausgang e des zweiten konjunktiven Verknüpfungsgliedes 7 erscheinen. Durch Überlagerung der an den Ausgängen e und f des zweiten und dritten konjunktiven Verknüpfungsgliedes 7 und 17 abgegebenen Nadelimpulse wird am Ausgang g des ersten disjunktiven Verknüpfungsgliedes 19 das in Fig. 2g gezeigte Signal erzeugt. Die Amplitude der Impulse entspricht daher der Versorgungsspannung der Verknüpfungsglieder. Sie kann beispielsweise für eine Sendeschaltung größer als für eine Empfangsschaltung oder auch umgekehrt sein. Da leitungsseitig meist Signale kleiner Amplitude ausreichen, müssen die Verknüpfungsglieder demzufolge nur mit einer niedrigen Versorgungsspannung gespeist werden, was eine beträchtliche Leistungseinsparung zur Folge hat. Ein geringer Leistungsverbrauch wird auch dadurch begünstigt, daß die Nadelimpulse nur eine geringe Spannungs-Zeit-Fläche haben.

Das in Fig. 2g gezeigte Signal wird über den Trennstellenübertrager 1, der die eigentliche galvanische Trennung bewirkt, übertragen, so daß am Anschluß h das in Fig. 2h gezeigte Signal erscheint. Dieses wird dem Schalttransistor 35 zugeführt. Dieser wirkt als Impulsformer, so daß das in Fig. 2i gezeigte Signal entsteht. Dieses wird durch das Verknüpfungsglied 43 invertiert, so daß an dessen Ausgang der in Fig. 2k gezeigte Impulszug entsteht. Ferner wird das in Fig. 2i gezeigte Ausgangssignal des Schalttransistors 35 neben der ersten monostabilen Schaltung 39 auch der zweiten monostabilen Schaltung 41 zugeführt. Da Letztere eine Schaltzeit hat, die länger als der doppelte minimale Abstand der an ihrem Eingang anliegenden Nadelimpulse ist, hat ihr Ausgangssignal $\overline{PE'}$ (siehe auch Fig. 2) so lange den Signalpegel 0-Volt, wie überhaupt Datensignale DA übertragen werden. Auf diese Weise kann die Pegelinformation identifiziert werden. Da im Unterschied dazu die Schaltzeit der ersten monostabilen Schaltung 39 zwischen dem einfachen und dem doppelten minimalen Abstand der Nadelimpulse liegt, nimmt deren Ausgangssignal (siehe Fig. 2l) nur dann einen anhaltend positiven Signalpegel an, wenn die Nadelimpulse an ihrem Eingang mit minimalem Abstand auftreten, was nur dann der Fall ist, wenn das Datensignal DA (siehe Fig. 2) den 0-Volt-Pegel annimmt. Wenn das Datensignal DA dagegen positives Potential hat, dann wird das erste konjunktive Verknüpfungsglied 7 gesperrt, so daß an dessen Ausgang e keine Nadelimpulse auftreten, mit der Folge, daß die an der ersten monostabilen Schaltung 39 auftretenden Nadelimpulse den doppelten minimalen Abstand haben. Da aber die Schaltzeit der ersten monostabilen Schaltung 39 kleiner als der doppelte minimale Abstand der Nadelimpulse ist, fällt deren Ausgangssignal nach Ablauf der Schaltzeit auf den 0-Volt-Pegel zurück und nimmt erst bei Auftreten des nächsten Nadelimpulses erneut den positiven Signalpegel an. Mit der negativen Flanke des Ausgangssignales dieser ersten monostabilen Schaltung 39 wird die nachfolgende bistabile Schaltung 47 gesetzt, während sie durch das Ausgangssignal (Fig. 2m) des vierten konjunktiven Verknüpfungsgliedes 49 rückgesetzt wird. Dadurch wird es möglich, daß aus dem Auftreten der Nadelimpulse mit minimalem bzw. mit doppeltem minimalem Abstand das Datensignal wiederhergestellt werden kann. Es erscheint als Signal DA' (Fig. 2) am Ausgang der bistabilen Schaltung 47.

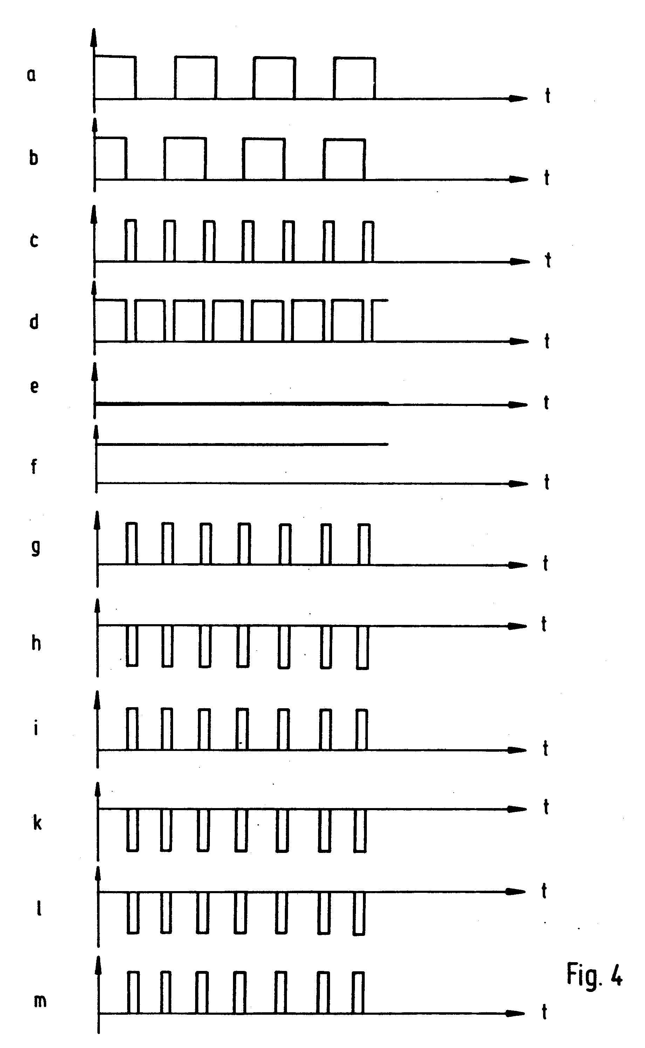

In Fig. 3 ist eine zweite Ausführungsform einer Schaltungsanordnung zur erdfreien Übertragung digitaler Signale über Trennstellen dargestellt, bei der im Unterschied zur vorstehend beschriebenen ersten Ausführungsform, bei der das Datensignal durch den Abstand der Nadelimpulse charakterisiert wurde, der Zustand des Datensignals durch die Polarität der Nadelimpulse gekennzeichnet wird. Sie enthält einen insgesamt mit 53 bezeichneten Rechtecksignalgenerator, der in bekannter Weise aufgebaut ist und daher nicht näher beschrieben wird. Die am Ausgang des Rechtecksignalgenerators 53 abgegebene Rechteckschwingung wird dem einen Eingang 55 eines ersten Exklusiv-ODER-Gliedes 57 direkt und dessen anderem Eingang 59 unter Vorschaltung eines eine Verzögerung bewirkenden R-C-Gliedes 61 zugeführt, mit der Folge, daß am Ausgang 63 dieses ersten Exklusiv-ODER-Gliedes 57 Nadelimpulse entstehen. Der Ausgang 63 dieses ersten Exklusiv-ODER-Gliedes 57 ist einerseits mit dem einen Eingang 65 eines zweiten Exklusiv-ODER-Gliedes 67 und andererseits mit dem Drainanschluß 69 eines Feldeffekttransistors 71 verbunden. Wenn keine definierte Pegelinformation $\overline{PE}$ am Steuereingang 73 des Feldeffekttransistors 71 anliegt, ist dieser leitend gesteuert, da die Steuerelektrode 73 über einen Widerstand 75 an positives Potential angeschlossen ist. Bei leitend geschaltetem Feldeffekttransistor 71 wird der Ausgang 63 des ersten Exklusiv-ODER-Gliedes 57 auf Erdpotential gelegt und dadurch gesperrt. Liegt dagegen als Pegelinformation $\overline{PE}$ das 0-Volt-Potential an, so wird der Feldeffekttransistor 71 sperrend geschaltet, mit der Folge, daß die Nadelimpulse am Ausgang 63 des ersten Exklusiv-ODER-Gliedes 57 zum zweiten Exklusiv-ODER-Glied 67 gelangen. Über den zweiten Eingang 77 des zweiten Exklusiv-ODER-Gliedes 67 können die Nadelimpulse in Abhängigkeit vom Zustand des Datensignals DA invertiert werden. Der Ausgang 79 des zweiten Exklusiv-ODER-Gliedes 67 ist über einen Entkopplungskondensator 81 mit dem einen Anschluß 83 der Primärwirklung 85 eines Trennstellenübertragers 87 verbunden. Der andere Anschluß 89 der Primärwicklung 85 des Trennstellenübertragers 87 ist mit dem Ausgang 91 eines dritten Exklusiv-ODER-Gliedes 93 verbunden, dessen einer Eingang 95 auf Erdpotential liegt und dessen anderer Eingang 97 vom Datensignal DA gesteuert ist. Dieses dritte Exklusiv-ODER-Glied 93 dient lediglich zum Ausgleich der durch die Impulsinvertierung bedingten Potentialverschiebung am Trennstellenübertrager 87.

Der Trennstellenübertrager 87 hat zwei Sekundärwicklungen 99 und 101. Während jeweils ein Anschluß der beiden Sekundärwicklungen 99, 101 auf Erdpotential liegt, sind der freie Anschluß der ersten Sekundärwicklung 99 mit der Steuerelektrode 103 eines ersten Transistors 105 und der freie Anschluß der zweiten Sekundärwicklung 101 mit der Steuerelektrode 107 eines zweiten Transistors 109 verbunden. Die beiden Transistoren 105 und 109 werden von den Sekundärwicklungen 99 und 101 aufgrund ihres einander entgegengetzten Wicklungssinns gegenphasig angesteuert. Die Kollektoranschlüsse 111 bzw. 113 der Transistoren 105 und 109 sind jeweils einerseits über einen Widerstand 115 bzw. 117 mit dem positiven Versorgungsspannungspotential und andererseits mit dem Setzeingang 119 bzw. Rücksetzeingang 121 einer bistabilen Schaltung 123 verbunden, an deren Ausgang 125 das wiederhergestellte Datensignal DA' erscheint. Die bistabile Schaltung 123 ist durch entsprechende Verschaltung zweier NAND-Glieder 127 und 129 gebildet.

Die an den Kollektoren 111 bzw. 113 der Transistoren 105 bzw. 109 auftretenden Signale werden zur Überlagerung einem dritten NAND-Glied 131 zugeführt. Das Ausgangssignal dieses dritten NAND-Gliedes 132 wird durch eine Gleichrichterdiode 133 gleichgerichtet und durch eine Siebschaltung 135 gesiebt, so daß sich nach Invertierung durch ein viertes NAND-Glied 137 an dessen Ausgang 139 die wiederhergestellte Pegelinformation $\overline{PE}'$ ergibt. Der Ausgang 139 des vierten NAND-Gliedes 137 ist über eine Clamp-Diode 141 und einen Widerstand 143 mit dem Ausgang 125 der bistabilen Schaltung 123 verbunden.

Zum besseren Verständnis der Funktionsweise der vorstehend beschriebenen Schaltungsanordnung ist in Fig. 4 ein Impulsbild dargestellt, das die Signale an bestimmten Stellen der in Fig. 3 gezeigten Schaltungsanordnung wiedergibt. Dieses Impulsbild soll nun im folgenden in Verbindung mit Fig. 3 erläutert werden.

Fig. 4b zeigt die am Ausgang des Rechtecksignalgenerators 53 auftretende Rechteckschwingung, die dem Eingang 55 des ersten Exklusiv-ODER-Gliedes 57 direkt zugeführt wird. Durch das R-C-Glied 61 wird die in Fig. 4b gezeigte Rechteckschwingung verzögert, so daß die in Fig. 4a gezeigte Reckteckschwingung entsteht, die dem Eingang 59 des ersten Exklusiv-ODER-Gliedes 57 zugeführt wird. Durch dieses erste Exklusiv-ODER-Glied 57 werden die in Fig. 4c dargestellten Nadelimpulse abgeleitet. Liegt am Datensignaleingang ein 0-VoltSignalpegel an, so werden die Nadelimpulse nicht invertiert, so daß am Ausgang des zweiten Exklusiv-ODER-Gliedes 67 ebenfalls die in Fig. 4c gezeigte Impulsfolge erscheint. Liegt dagegen am Datensignaleingang ein positiver Signalpegel an, so wird durch das zweite Exklusiv-ODER-Glied 67 die in Fig. 4c gezeigte Impulsfolge invertiert, so daß an dessen Ausgang 79 die in Fig. 4d ersichtliche Impulsfolge entsteht. Wird, für den Fall, daß das Datensignal DA den 0-Volt-Signalpegel annimmt die in Fig. 4c gezeigte Impulsfolge nicht invertiert, so findet auch keine Potentialverschiebung am Trennstellenübertrager 87 statt, die durch das dritte Exklusiv-ODER-Glied 93 kompensiert werden müßte. Der Ausgang 91 dieses Exklusiv-ODER-Gliedes 93 liegt dann gemäß Fig. 4e auf dem 0-Volt-Potential. Wird die Impulsfolge dagegen bei einem Datensignal DA mit postivem Signalpegel invertiert, so wird die damit verbundene Potentialverschiebung am Trennstellenübertrager 87 durch das in Fig. 4f gezeigte Ausgangssignal des dritten Exklusiv-ODER-Gliedes 93 kompensiert. Es entsteht somit an der Primärwicklung 85 des Trennstellenübertragers 87 eine Spannung U, die bei einem Datensignal DA mit 0-Volt-Pegel das in Fig. 4g gezeigte Impulsbild und für den Fall eines Datensignals mit positivem Signalpegel das in Fig. 4h gezeigte Impulsbild hat. Im ersteren Fall, wenn der Datensignaleingang auf Nullpotential liegt, ergibt sich für die Spannung $U_1$ der ersten Sekundärwicklung 99 des Trennstellenübertragers 87 der in Fig. 4i dargestellte Signalverlauf und für die Spannung $U_2$ an der zweiten Sekundärwicklung 101 des Trennstellenübertragers 87 die in Fig. 4k gezeigte Impulsfolge. Liegt dagegen der Datensignaleingang auf positivem Potential, so hat die Spannung $U_1$ an der ersten Sekundärwicklung 99 des Trennstellenübertragers den in Fig. 4l gezeigten Spannungsverlauf und die Spannung $U_2$ an der zweiten Sekundärwicklung 101 des Trennstellenübertragers 87 den in Fig. 4m gezeigten Spannungsverlauf. Die beiden Transistoren 105 und 109 werden also abhängig vom Zustand des Datensignals DA entweder von den Signalen gemäß Fig. 4i bzw. Fig. 4k oder von den Signalen gemäß Fig. 4l bzw. Fig. 4m gegenphasig angesteuert.

**Patentansprüche**

1.   Schaltungsanordnung zur erdfreien Übertragung eines digitalen Signals über Trennstellen, mit einem Übertrager (1) zum Übertragen von aus den Flanken einer Rechteckschwingung mit gegenüber der Frequenz des digitalen Signals wesentlich höherer Frequenz abgeleiteten Nadelimpulsen als Hilfssignale, mit einer Steuerung zum vom Zustand des digitalen Signals abhängigen Steuern der Zuführung der Nadelimpulse zum Übertrager (1) und mit einem sekundärseitigen Signalgeber (39, 41) zum Wiederherstellen des digitalen Signals durch vom Auftreten bzw. der Polarität der Nadelimpulse abhängige Signalgabe, dadurch **gekennzeichnet,** daß zur Übertragung eines Datensignals sowie einer diesem vorausgehenden Pegelinformation die Zuführung der Nadelimpulse zum Übertrager abhängig von der Pegelinformation ermöglicht bzw. unterbunden wird, ein Rechtecksignalgenerator (3) mit durch die Pegelinformation abschaltbarem Ausgangssignal mit einer die Nadelimpulse erzeugenden Verknüpfungsschaltung (5, 7, 9, 11, 17, 19) verbunden ist, die ferner durch den Zustand des Datensignals gesteuerte Unterdrückungsmittel für jeden zweiten Nadelimpuls enthält, und als Signalgeber auf der Sekundärseite Speicherglieder (39, 41) vorgesehen sind, deren Speicherzeiten so bemessen sind, daß sie vorgegebene Abstände der Nadelimpulse überbrücken.

2. Schaltungsanordnung nach Anspruch 1, dadurch **gekennzeichnet,** daß dem Rechtecksignalgenerator (3) ein erstes, durch die Pegelinformation gesteuertes konjunktives Verknüpfungsglied (5) nachgeschaltet ist, dessen Ausgang mit einer Reihenschaltung eines ersten und eines zweiten verzögernden Invertierers (9, 11) verbunden ist, daß die Ausgänge des ersten konjunktiven Verknüpfungsgliedes (5) und des ersten Invertierers (9) zusammen mit dem Datensignal auf ein zweites konjunktives Verknüpfungsglied (7) geführt sind, daß die Ausgänge des ersten und des zweiten Invertierers (9, 11) auf ein drittes konjunktives Verknüpfungsglied (17) geführt sind, und daß die Ausgänge des zweiten und dritten konjunktiven Verknüpfungsgliedes (7, 17) auf ein disjunktives Verknüpfungsglied (19) geführt sind, dessen Ausgang mit der Primärwicklung (25) des Übertragers (1) verbunden ist.

3. Schaltungsanordnung nach Anspruch 1 oder 2, dadurch **gekennzeichnet,** daß die Sekundärwicklung (29) des Übertragers (1) parallel mit einer ersten und einer zweiten flankengesteuerten monostabilen Schaltung (39, 41) verbunden ist, deren Erste (39) eine Schaltzeit hat, die zwischen dem einfachen und dem doppelten minimalen Abstand der Nadelimpulse liegt, während die Schaltzeit der Zweiten (41) länger als der doppelte minimale Abstand der Nadelimpulse ist.

4. Schaltungsanordnung nach Anspruch 3, dadurch **gekennzeichnet,** daß die Sekundärwicklung (29) des Übertragers (1) ferner mit einem vierten konjunktiven Verknüpfungsglied (49) verbunden ist, das durch das Ausgangssignal der ersten monostabilen Schaltung (39) gesteuert ist, welches außerdem dem Setzeingang (45) einer bistabilen Schaltung (47) zugeführt ist, deren Rücksetzeingang (51) mit dem Ausgang des vierten konjunktiven Verknüpfungsgliedes (49) verbunden ist.

5. Schaltungsanordnung nach einem der vorhergehenden Ansprüche, dadurch **gekennzeichnet,** daß die Sekundärwicklung (29) des Übertragers (1) mit der Steuerelektrode (33) eines Schalttransistors (35) verbunden ist, an dessen Kollektor die sekundärseitig zu nutzenden Nadelimpulse auftreten.

6. Schaltungsanordnung zur erdfreien Übertragung eines digitalen Signals über Trennstellen, mit einem Übertrager (87) zum Übertragen von aus den Flanken einer Rechteckschwingung mit gegenüber der Frequenz des digitalen Signals wesentlich höherer Frequenz abgeleiteten Nadelimpulsen als Hilfssignale, mit einer Steuerung zum vom Zustand des digitalen Signals abhängigen Steuern der Zuführung der Nadelimpulse zum Übertrager (87) und mit einem sekundärseitigen Signalgeber (123) zum Wiederherstellen des digitalen Signals durch vom Auftreten bzw. der Polarität der Nadelimpulse abhängige Signalgabe, dadurch **gekennzeichnet,** daß
zur Übertragung eines Datensignals sowie einer diesem vorausgehenden Pegelinformation die Zuführung der Nadelimpulse zum Übertrager abhängig von der Pegelinformation ermöglich bzw. unterbunden wird,
die Steuerung eine vom Zustand des Datensignals abhängige Polaritätssteuerung (67, 77; 93, 97) für die Nadelimpulse enthält,
ein Rechtecksignalgenerator (53) vorgesehen ist, dessen Ausgang zur Ableitung von Nadelimpulsen mit einem ersten Exklusiv-ODER-Glied (57) an dessen einem Eingang direkt und an dessen anderem Eingang über eine Verzögerung (61) verbunden ist,
der Ausgang (63) dieses ersten Exklusiv-ODER-Gliedes (57) mit dem einen Eingang (65) eines zweiten Exklusiv-ODER-Gliedes (67) verbunden ist, das an seinem anderen Eingang (77) mit dem Datensignal und an seinem Ausgang (79) mit dem einen Anschluß (83) der Primärwicklung (85) des Übertragers (87) verbunden ist,
ein an seinem Ausgang (91) mit dem anderen Anschluß (89) der Primärwicklung (87) verbundenes drittes Exklusiv-ODER-Glied (93) vorgesehen ist,
der mit dem Ausgang (63) des ersten Exklusiv-ODER-Gliedes (57) verbundene Eingang (65) des zweiten Exklusiv-ODER-Gliedes (67) über einen durch die Pegelinformation gesteuerten Transistor (71) mit Erdpotential verbunden ist,
und zur Signalgabe auf der Sekundärseite eine bistabile Schaltung (123) vorgesehen ist, deren Ausgangssignal sich in Abhängigkeit von der Polarität der übertragenen Nadelimpulse ändert.

7. Schaltung nach Anspruch 6, dadurch **gekennzeichnet,** daß der Übertrager (87) zwei Sekundärwicklungen (99, 101) hat, die mit dem Setz- bzw. Rücksetzeingang (119, 121) der bistabilen Schaltung (123) und ferner zusammengefaßt mit einer Gleichrichter- und Siebschaltung (133, 135) verbunden sind.

8. Schaltungsanordnung nach Anspruch 7, dadurch **gekennzeichnet,** daß jeweils ein Anschluß der beiden Sekundärwicklungen (99, 101) des Übertragers (87) auf Erdpotential liegt, und daß deren andere Anschlüsse mit den Steuerelektroden (103, 107) zweier Transistoren (105, 109) verbunden sind, deren Kollektoranschlüsse (111, 113) einerseits mit dem Setz- bzw. Rücksetzeingang (119, 121) der bistabilen Schaltung (123) und andererseits mit den Eingängen eines konjunktiven Verknüpfungsgliedes (131) verbunden sind.

9. Schaltungsanordnung nach Anspruch 8, dadurch **gekennzeichnet,** daß die bistabile Schaltung (123) aus zwei weiteren konjunktiven Verknüpfungsgliedern (127, 129) aufgebaut ist.

10. Schaltungsanordnung nach einem der Ansprüche 7 bis 9, **gekennzeichnet** durch eine Diode (141), die den Ausgang (125) der bistabilen Schaltung (123) bei fehlendem Datensignal mit definiertem Potential verbindet.

**Claims**

1. A circuit arrangement for the unearthed transmission of a digital signal via electrically insulated interfaces, comprising a transformer (1) for transmitting auxiliary signals in the form of needle pulses derived from the flanks of a square wave at a frequency much higher than the frequency of the digital signal, comprising a control means whereby the feeding of needle pulses to the transformer (1) is controlled in dependence on the state of the digital signal, and comprising a signal generator (39, 41) on the secondary side for restoring the digital signal by signal generation in dependence on the occurrence and/or polarity of the needle pulses, characterised in that
for the purpose of transmitting a data signal preceded by level information the feeding of the needle pulses to the transformer is permitted or prohibited in dependence on the level information,
a square wave signal generator (3) having an output signal adapted to be disconnected by the level information is connected to a logic circuit (5, 7, 9, 11, 17, 19), which generates the needle pulses and which also comprises suppression means for every other needle pulse, such suppression means being controlled by the state of the data signal,
and memory elements (39, 41) are provided as signal generators on the secondary side, the memory times thereof being so dimensioned as to bridge preset distances between the needle pulses.

2. A circuit arrangement according to claim 1, characterised in that the square-wave signal generator (3) is followed by a first conjunctive logic element (5) controlled by the level information, the output of which is connected to a series circuit of a first and a second delaying inverter (9, 11), in that the outputs of the first conjunctive logic element (5) and of the first inverter (9) are fed, together with the data signal, to a second conjunctive logic element (7), in that the outputs of the first and second inverter (9, 11) are fed to a third conjunctive logic element (17), and in that the outputs of the second and third conjuctive logic elements (7, 17) are fed to a disjunctive logic element (19), the output of which is connected to the primary winding (25) of the transformer (1).

3. A circuit arrangement according to claim 1 or 2, characterised in that the secondary winding (29) of the transformer (1) is connected in parallel to a first and a second flank-controlled monostable circuit (39, 41), the first of which (39) has a switching time between once and twice the minimal distance between the needle pulses, while the switching time of the second (41) is longer than twice the minimum distance between the needle pulses.

4. A circuit arrangement according to claim 3, characterised in that the secondary winding (29) of the transformer (1) is also connected to a fourth conjunctive logic element (49) which is controlled by the output signal of the first monostable circuit (39), which is also fed to the setting input (45) of a bistable circuit (47), the reset input (51) of which is connected to the output of the fourth conjunctive logic element (49).

5. A circuit arrangement according to any one of the preceding claims, characterised in that the secondary winding (29) of the transformer (1) is connected to the control electrode (33) of a switching transistor (35), at whose collector the needle pulses appear which are to be used on the secondary side.

6. A circuit arrangement for the unearthed transmission of a digital signal via electrically insulated interfaces, comprising a transformer (87) for transmitting auxiliary signals in the form of needle pulses derived from the flanks of a square wave at a frequency much higher than the frequency of the digital signal, comprising a control means whereby the feeding of needle pulses to the transformer (87) is controlled in dependence on the state of the digital signal, and comprising a signal generator (123) on the secondary side for restoring the digital signal by signal generation in dependence on the occurrence and/or polarity of the needle pulses, characterised in that for the purpose of transmitting a data signal preceded by level information the feeding of the needle pulses to the transformer is permitted or prohibited in dependence on the level information,
the control system comprises a polarity control (67, 77; 93, 97) for the needle pulses, such polarity control being dependent on the state of the data signal,
a square-wave signal generator (53) is provided, the output of which, for the purpose of deriving needle pulses, is connected to a first exclusive-OR gate (57), directly to one input thereof and via a delay (61) to the other input thereof,
the output (63) of this first exclusive-OR gate (57) is connected to one input (65) of a second exclusive-OR gate (67) which at its other input (77) is connected to the data signal and at its output (79) to one connection (83) of the primary winding (85) of the transformer (87),
a third exclusive-OR gate (93) is provided which at its output (91) is connected to the other connection (89) of the primary winding (87),
the input (65) of the second exclusive-OR gate (67) connected to the output (63) of the first exclusive-OR gsate 57 is connected to earth potential via a transistor (71) controlled by the level information, and a bistable circuit (123) is provided for signal generation on the secondary side, the output signal of the bistable circuit varying in dependence on the polarity of the transmitted needle pulses.

7. A circuit arrangement according to claim 6, characterised in that the transformer (87) has two secondary windings (99, 101) connected respectively to the setting and reset input (119, 121) of the bistable circuit (123) and also in combination to a rectifier and filter circuit (133, 135).

8. A circuit arrangement according to claim 7, characterised in that one connection in each case of the two secondary windings (99, 101) of the transformer (87) is at earth potential while the other connections thereof are connected to the control electrodes (103, 107) of two transistors (105, 109) whose collector connections (111, 113) are connected on the one hand repectively to the setting and reset input (119, 121) of the bistable circuit (123) and on the other hand to the inputs of a conjunctive logic element (131).

9. A circuit arrangement according to claim 8, characterised in that the bistable circuit (123) is made up of another two conjunctive logic elements (127, 129).

10. A circuit arrangement according to any one of claims 7 to 9, characterised by a diode (141), which connects the output (125) of the bistable circuit (123) to defined potential in the absence of the data signal.

**Revendications**

1. Montage pour la transmission sans mise à la terre d'un signal numérique par l'intermédiaire de points de coupure, comportant un transformateur (1) pour la transmission, en tant que signaux auxiliaires, d'impulsions fines dérivées des fronts d'une onde rectangulaire de fréquence nettement supérieure à la fréquence du signal numérique, avec un dispositif de commande pour commander la fourniture des impulsions fines au transformateur (1) en fonction de l'état du signal numérique et avec un transmetteur de signaux (39, 41) disposé du côté du secondaire pour rétablir le signal numérique par une transmission de signaux dépendant de la présence et/ou de la polarité des impulsions fines, caractérisé en ce que pour la transmission d'un signal de données ainsi que d'une information de niveau qui le précède, la fourniture des impulsions fines au transformateur est autorisée ou inhibée en fonction de l'information de niveau, un générateur de signaux rectangulaires (3) à signal de sortie pouvant être coupé par l'information de niveau est relié à un montage logique (5, 7, 9, 11, 17, 19) engendrant les impulsions fines et contient en outre des moyens d'inhibition commandés par l'état du signal de données pour une impulsion fine sur deux, et des éléments de mémoire (39, 41) dont les temps de mémoire sont calculés de façon qu'ils fassent la jonction d'intervalles prédéterminés des impulsions fines sont prévus comme transmetteurs de signaux du côté du secondaire.

**2.** Montage selon la revendication 1, caractérisé en ce que le générateur de signaux rectangulaires (3) est suivi par un premier élément logique ET (5) commandé par l'information de niveau, dont la sortie est reliée à un montage série d'un premier et d'un second inverseurs à retard (9, 11), en ce que les sorties du premier élément logique ET (5) et du premier inverseur (9) sont transmises avec le signal de données à un second élément logique ET (7), en ce que les sorties des premier et second inverseurs (9, 11) sont transmises à un troisième élément logique ET (17), et en ce que les sorties des second et troisième éléments logiques ET (7, 17) sont transmises à un élément logique OU (19) dont la sortie est reliée au primaire (25) du transformateur (1).

**3.** Montage selon la revendication 1 ou 2, caractérisé en ce que le secondaire (29) du transformateur (1) est monté en parallèle avec un premier et un second montages monostables (39, 41) commandés par des fronts d'impulsion, dont le premier (39) a un temps de passage compris entre une fois et deux fois l'intervalle minimum des impulsions fines, tandis que le temps de passage du second (41) est supérieur au double de l'intervalle minimum des impulsions fines.

**4.** Montage selon la revendication 3, caractérisé en ce que le secondaire (29) du transformateur (1) est en outre relié à un quatrième élément logique ET (49) qui est commandé par le signal de sortie du premier montage monostable (39) qui est fourni en outre à l'entrée de positionnement (45) d'un montage bistable (47) dont l'entrée de restauration (51) est reliée à la sortie du quatrième élément logique ET (49).

**5.** Montage selon l'une des revendications précédentes, caractérisé en ce que le secondaire (29) du transformateur (1) est relié à l'électrode de commande (33) d'un transistor de commutation (35) au collecteur duquel aparaissent les impulsions fines à utiliser du côté du secondaire.

**6.** Montage pour la transmission sans mise à la terre d'un signal numérique par l'intermédiaire de points de coupure, comportant un transformateur (87) pour la transmission, en tant que signaux auxiliaires, d'impulsions fines dérivées des fronts d'une onde rectangulaire de fréquence nettement supérieure à la fréquence du signal numérique, avec un ensemble de commande pour commander la fourniture des impulsions fines au transformateur (87) en fonction de l'état du signal numérique, et avec un transmetteur de signaux (123) disposé du côté du secondaire pour rétablir le signal numérique par une transmission de signaux dépendant de la présence et/ou de la polarité des impulsions fines, caractérisé en ce que, pour la transmission d'un signal de données ainsi que d'une information de niveau qui le précède, la fourniture des impulsions fines au transformateur est autorisée ou inhibée en fonction de l'information de niveau, l'ensemble de commande comprend une commande de polarité (67, 77 ; 93, 97) des impulsions fines dépendant de l'état du signal de données,
on prévoit un générateur de signaux rectangulaires (53) dont la sortie est, pour extraire des impulsions fines, reliée à un premier élément OU exclusif (57) directement à l'une de ses entrées et à son autre entrée par l'intermédiaire d'un dispositif à retard (61),
la sortie (63) de ce premier élément OU exclusif (57) est reliée à une première entrée (65) d'un second élément OU exclusif (67) qui est relié à son autre entrée (77) au signal de données et à sa sortie (79) à une première borne (83) du primaire (85) du transformateur (87), il est prévu un troisième élément OU exclusif (93) relié à sa sortie (91) à l'autre borne (89) du primaire (87),
l'entrée (65) du second élément OU exclusif (67) reliée à la sortie (63) du premier élément OU exclusif (57) est reliée à la masse par l'intermédiaire d'un transistor (71) commandé par l'information de niveau,
et pour la transmission des signaux du côté sécondaire, il est prévu un montage bistable (123) dont le signal de sortie varie en fonction de la polarité des impulsions fines transmises.

**7.** Montage selon la revendication 6, caractérisé en ce que le transformateur (87) comporte deux secondaires (99, 101) qui sont reliés à l'entrée de positionnement, respectivement de restauration (119, 121), du montage bistable (123) et en outre ensemble à un montage redresseur et de filtrage (133, 135).

**8.** Montage selon la revendication 7, caractérisé en ce qu'une borne de chacun des deux secondaires (99, 101) du transformateur (87) est à la masse, et en ce que leurs secondes bornes sont reliées aux électrodes de commande (103, 107) de deux transistors (105, 109) dont les collecteurs (111, 113) sont reliés d'une part à l'entrée de positionnement, respectivement de restauration (119, 121), du montage bistable (123) et, d'autre part, aux entrées d'un élément logique ET (131).

**9.** Montage selon la revendication 8, caractérisé en ce que le montage bistable (123) est constitué par deux autres éléments logiques ET (127, 129).

**10.** Montage selon l'une des revendications 7 à 9, caractérisé par une diode (141) qui relie la sortie (125) du montage bistable (123) à un potentiel défini en l'absence de signal de données.

Fig. 3

Fig. 1

Fig. 2

EP 0 198 263 B1

Fig. 4